# EUROPÄISCHE PATENTSCHRIFT

(11) **EP 4 057 026 B1**
(45) Veröffentlichungstag und Bekanntmachung des Hinweises auf die Patenterteilung: **30.10.2024**
(21) Anmeldenummer: 22160555.3
(22) Anmeldetag: 07.03.2022
(51) Int. Cl.: G01S 17/26, G01S 7/481, G01S 7/4912, G01S 17/34, G01S 17/36, G01S 17/58

(54) **ABSTANDSMESSUNG MITTELS EINES AKTIVEN OPTISCHEN SENSORSYSTEMS**
DISTANCE MEASUREMENT USING AN ACTIVE OPTICAL SENSOR SYSTEM
MESURE DE DISTANCE AU MOYEN D'UN SYSTÈME DE CAPTEUR OPTIQUE ACTIF

(30) Priorität: 10.03.2021 DE 102021105770
(43) Veröffentlichungstag der Anmeldung: 14.09.2022
(73) Patentinhaber: VOLKSWAGEN AG, 38440 Wolfsburg (DE); Audi AG, 85045 Ingolstadt (DE); Fraunhofer-Gesellschaft zur Förderung der angewandten Forschung e.V., 80686 München (DE)
(72) Erfinder: KURZ, Heiko, 30177 Hannover (DE); MEINECKE, Marc-Michael, 38524 Sassenburg (DE); KOTTKE, Christoph, 10437 Berlin (DE); RUNGE, Patrick, 14193 Berlin (DE); RUSTIGE, Pascal, 12051 Berlin (DE); FREUND, Ronald, 12487 Berlin (DE); SCHWENKERT, Michael, 85051 Ingolstadt (DE)
(74) Vertreter: Hofstetter, Schurack & Partner

(56) Entgegenhaltungen:
- WO-A1-2010/102613
- WO-A2-2018/050906
- DE-A1- 102012 001 754

## Beschreibung

Die vorliegende Erfindung betrifft ein Verfahren zur Abstandsmessung mittels eines aktiven optischen Sensorsystems, wobei mittels einer Laserquelle eine initiale Pulsfolge mit einem initialen Frequenzspektrum, das einem Frequenzkamm entspricht, erzeugt wird, sowie ein entsprechendes aktives optisches Sensorsystem zur Abstandsmessung.

Dokument US 5,835,199 A beschreibt ein Laserradarsystem, bei dem Entfernung und Geschwindigkeit eines abzubildenden Objekts mit hoher Entfernungsauflösung und geringer Mehrdeutigkeit gemessen werden kann. Das Laserradarsystem funktioniert basierend auf einer Kreuzkorrelation von Wellenzügen, die mehrere Frequenzkomponenten mit verschiedenen Phasen und inkommensurablem spektralem Frequenzabstand aufweisen. Das Laserradarsystem weist einen Frequenzkammgenerator auf und eine Schaltvorrichtung, um Frequenzkämme mit zufälligen Phasenlagen zu emittieren. Zur Messung kann ein Heterodyndetektor eingesetzt werden.

Dokument US 2020/0150250 A1 beschreibt Verfahren zur Multiton-Dauerstricherkennung und Entfernungsmessung. Dazu wird ein Multiton-Dauerstrichsignal ausgesendet und reflektierte Anteile werden anhand einer Heterodyndetektion ausgewertet.

Dokument WO 2010/102613 A1 beschreibt ein Verfahren zum Messen des Abstandes eines Objekts, wobei bei dem Verfahren ein Sendesignal mit einer eine vorgegebene Pulswiederholfrequenz aufweisenden Pulsfolge erzeugt wird, so dass das Sendesignal im Frequenzbereich einen Frequenzkamm aufweist. Das Sendesignal wird auf das Objekt gelenkt und ein von dem Objekt reflektiertes Reflexionssignal wird empfangen. Die Phasendifferenz zwischen dem Sendesignal und dem Reflexionssignal für eine vorgegebene Spektrallinie des Frequenzkammes wird bestimmt. Ferner kann die Phasendifferenz zwischen dem Sendesignal und dem Reflexionssignal für eine zweite Spektrallinie des Frequenzkammes bestimmt werden. Sowohl die Phasendifferenz zwischen dem Sendesignal und dem Reflexionssignal für die erste Spektrallinie als auch die Phasendifferenz zwischen dem Sendesignal und dem Reflexionssignal für die zweite Spektrallinie werden bei der Bestimmung des Abstands herangezogen.

Dokument WO 2018/050906 A1 beschreibt eine Vorrichtung mit einem Laserscanner und eine Recheneinheit, die dazu eingerichtet ist, den Laserscanner anzusteuern, um einen codierten ersten Pulszug von Laserlicht zu senden und um mindestens einen codierten zweiten Pulszug von Laserlicht zu senden. Die Recheneinheit ist weiterhin dazu eingerichtet, den ersten Pulszug in Messsignalen eines Detektors zu erkennen und dadurch einen ersten Entfernungswert eines Umfeldobjekts zu erhalten, sowie den mindestens einen zweiten Pulszug in den Messsignalen des Detektors zu erkennen und dadurch mindestens einen zweiten Entfernungswert des Umfeldobjekts zu erhalten. Als Anwendungsgebiet wird auf autonomes Fahren verwiesen. Die erste Codierung und die zweite Codierung können zum Beispiel als binäre Leistungsmodulation oder Leistungsmodulation höherer Ordnung implementiert werden.

Dokument DE 10 2012 001754 A1 beschreibt eine multiskalige Distanzmessung. Das Verfahren umfasst ein Erzeugen zweier Frequenzkammsignale, die unterschiedliche Linienabstände aufweisen. Es wird eine Referenzmessung durchgeführt, umfassend ein Überlagern der Frequenzkammsignale in einem Referenzstrahlengang und ein Erfassen des durch den Referenzstrahlengang propagierten Überlagerungssignals. Es wird eine Messung durchgeführt, umfassend ein Überlagern der Frequenzkammsignale, ein Einkoppeln des Überlagerungssignals in einen Messstrahlengang, und ein Erfassen des durch den Messstrahlengang propagierten Überlagerungssignals. Ein Wegunterschied zwischen dem Referenzstrahlengang und dem Messstrahlengang wird aus den erfassten Überlagerungssignalen ermittelt.

Es ist eine Aufgabe der vorliegenden Erfindung, ein verbessertes Konzept zur Abstandsmessung mittels eines aktiven optischen Sensorsystems anzugeben, durch das eine geringere Störanfälligkeit durch Wechselwirkungen mit anderen Lichtquellen erreicht werden kann.

Diese Aufgabe wird vorliegend gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, einen Frequenzkamm kohärent in zwei Teile aufzuteilen und somit zwei spektral kodierte Emissionskanäle zu realisieren und reflektierte Anteile durch zwei separate Heterodynmessungen frequenzselektiv und kohärent zu detektieren.

Gemäß dem verbesserten Konzept wird ein Verfahren zur Abstandsmessung mittels eines aktiven optischen Sensorsystems angegeben. Dabei wird mittels einer Laserquelle des aktiven optischen Sensorsystems eine initiale Pulsfolge erzeugt, die ein initiales Frequenzspektrum, welches einem Frequenzkamm entspricht, aufweist. Der Frequenzkamm weist eine Vielzahl von Moden mit einer jeweiligen Modenfrequenz auf. Basierend auf der initialen Pulsfolge werden eine erste Pulsfolge mit einem ersten Frequenzspektrum, das einem ersten Teil des Frequenzkamms entspricht, sowie eine erste Referenzpulsfolge mit dem ersten Frequenzspektrum erzeugt. Basierend auf der initialen Pulsfolge werden eine zweite Pulsfolge mit einem zweiten Frequenzspektrum erzeugt und eine zweite Referenzpulsfolge mit dem zweiten Frequenzspektrum. Das zweite Frequenzspektrum entspricht dabei einem von dem ersten Teil verschiedenen zweiten Teil des Frequenzkamms. Die erste Pulsfolge und die zweite Pulsfolge werden mittels des aktiven optischen Sensorsystems in Richtung eines Objekts in der Umgebung des aktiven optischen Sensorsystems emittiert. Ein erster Abstand des Objekts von dem Sensorsystem wird mittels wenigstens einer ersten Heterodynmessung basierend auf der ersten Referenzpulsfolge und basierend auf von dem Objekt reflektierten Anteilen der ersten Pulsfolge bestimmt. Ein zweiter Abstand des Objekts von dem Sensorsystem wird mittels wenigstens einer zweiten Heterodynmessung basierend auf der zweiten Referenzpulsfolge und von dem Objekt reflektierten Anteilen der zweiten Pulsfolge bestimmt.

Hier und im Folgenden kann der Begriff "Licht" derart verstanden werden, dass davon elektromagnetische Wellen im sichtbaren Bereich, im infraroten Bereich und/oder im ultravioletten Bereich umfasst sind. Dementsprechend kann auch der Begriff "optisch" derart verstanden werden, dass er sich auf Licht nach diesem Verständnis bezieht. Unter einer Pulsfolge kann dementsprechend eine Folge von Lichtpulsen verstanden werden. Vorzugsweise ist die Laserquelle dazu eingerichtet, Licht im infraroten Spektralbereich zu emittieren, beispielsweise Licht mit einer Wellenlänge in einem Bereich von 740 nm bis 3000 nm oder von 740 nm bis 2000 nm. Hat das emittierte Licht, wie beispielsweise im Falle der initialen Pulsfolge, mehrere im Wesentlichen monofrequente Moden, so handelt es sich bei der emittierten Wellenlänge insbesondere um eine Zentralwellenlänge.

Ein aktives optisches Sensorsystem weist definitionsgemäß eine Lichtquelle zum Aussenden von Licht beziehungsweise Lichtpulsen auf, im vorliegenden Fall die Laserquelle. Des Weiteren weist ein aktives optisches Sensorsystem definitionsgemäß wenigstens einen optischen Detektor auf, um reflektierte Anteile des ausgesendeten Lichts zu erfassen. Das aktive optische Sensorsystem ist insbesondere dazu eingerichtet, basierend auf den detektierten Anteilen des Lichts eines oder mehrere Sensorsignale zu erzeugen, zu bearbeiten oder auszugeben. Vorliegend weist das aktive optische Sensorsystem zur Durchführung der ersten und der zweiten Heterodynmessung insbesondere jeweils einen optischen Heterodyndetektor auf.

Zur ersten Heterodynmessung kann ein erster Heterodyndetektor die reflektierten Anteile der emittierten ersten Pulsfolge mit der ersten Referenzpulsfolge überlagern und das überlagerte Feld photoelektrisch messen. Ein sich ergebender Photostrom ist proportional zur Schwebungsfrequenz der überlagerten Pulsfolgen. Entsprechendes gilt analog für die zweite Heterodynmessung mittels eines zweiten Heterodyndetektors des aktiven optischen Sensorsystems.

Durch die Heterodynmessung wird effektiv ein Übergang von einer optischen Domäne in die elektrische Domäne vollzogen. Durch die Auswertung der entsprechend erzeugten Detektorsignale der Heterodyndetektoren kann auf einen Phasenunterschied zwischen den beiden überlagerten Pulsfolgen geschlossen werden, der wiederum von dem ersten beziehungsweise dem zweiten Abstand abhängt, die auf diese Weise bestimmt werden können.

Unter einer "Pulsfolge" kann hier und im Folgenden insbesondere eine Vielzahl aufeinanderfolgender Lichtpulse, insbesondere mit im Wesentlichen gleicher Pulsbreite, Pulshöhe und Abstand zwischen den aufeinanderfolgenden Lichtpulsen verstanden werden. Eine solche Pulsfolge kann insbesondere durch kohärente Überlagerung der Vielzahl von Moden mit ihren entsprechenden Modenfrequenzen erreicht werden, wobei die Modenfrequenzen benachbarter Moden jeweils einen im Wesentlichen konstanten Abstand zueinander haben, welcher einer Repetitionsfrequenz der emittierten Pulsfolge entspricht.

Die Pulsbreite der aufeinanderfolgenden Lichtpulse legt den spektralen Bereich des Frequenzkamms, also die Breite des Frequenzkamms, fest, und die Länge des Pulszuges, also die Anzahl der aufeinanderfolgenden Lichtpulse der Pulsfolge, legt die spektrale Breite der einzelnen Moden in der Frequenzdomäne fest. Der Frequenzkamm entspricht also einer Vielzahl äquidistanter, im Wesentlichen monofrequenter Moden mit einer konstanten Phasenbeziehung zueinander.

Zum Erzeugen des ersten Teils und des zweiten Teils des Frequenzkamms und insbesondere der ersten Pulsfolge und der zweiten Pulsfolge sowie der ersten und der zweiten Referenzpulsfolge, kann die initiale Pulsfolge spektral aufgeteilt werden, so dass der Frequenzkamm also in die zwei entsprechenden Teile geteilt wird. Mit Vorteil behalten diese aufgeteilten Teile des Frequenzkamms ihre definierte Phasenbeziehung, so dass die erste und die zweite Pulsfolge kohärent, also insbesondere phasenstabil und synchron zueinander sind. Entsprechendes gilt für die erste und zweite Referenzpulsfolge sowie für die erste Referenzpulsfolge bezüglich der ersten Pulsfolge und die zweite Referenzpulsfolge bezüglich der zweiten Pulsfolge.

Insbesondere enthält der erste Teil des Frequenzkamms nur Moden, die der zweite Teil nicht enthält und umgekehrt. Zum Erzeugen der ersten und der zweiten Pulsfolge sowie der ersten und der zweiten Referenzpulsfolge kann die initiale Pulsfolge beispielsweise frequenzabhängig gefiltert werden, so dass zwei zueinander phasenstabile und synchrone Teilkämme mit unterschiedlichen Frequenzbereichen entstehen, die jeweils wiederum räumlich geteilt werden können, um jeweils eine Pulsfolge und eine zugehörige Referenzpulsfolge zu erzeugen.

Beispielsweise für automatische oder teilweise automatische Fahrfunktionen bei Kraftfahrzeugen ist eine möglichst sichere Umfeldwahrnehmung von hoher Bedeutung. Dabei kann das Fahrzeugumfeld im Allgemeinen mit Hilfe von Sensoren, wie beispielsweise Radarsensoren, Lidarsensoren und/oder Kameras, erfasst werden. Von besonderer Relevanz kann etwa eine ganzheitliche und möglichst dreidimensionale Erfassung der Umwelt sein, so dass alle relevanten statischen und dynamischen Objekte registriert werden können. Dabei können beispielsweise anhand der entsprechenden Sensordaten von Lidarsensorsystemen Entfernungen gemessen und auch Objektklassifikationen durchgeführt werden können.

Bekannte Lidarsensorsysteme basieren beispielsweise auf dem Prinzip der Lichtlaufzeitmessung, auch als Time-of-Flight-Messung, ToF-Messung, bezeichnet. Dabei wird die Lichtlaufzeit eines Lichtpulses gemessen, der von dem Lidarsystem emittiert, in dem Umfeld reflektiert und sodann wiederum von dem Lidarsystem detektiert wird, um die zurückgelegte Distanz des Lichtpulses zu bestimmen. Die maximale Reichweite korreliert mit der Anzahl der detektierten Photonen und damit mit der Anzahl der von der Oberfläche eines Objekts in der Umgebung reflektierten Photonen. Je mehr Photonen zurückgeworfen und detektiert werden, mit desto höherer Wahrscheinlichkeit beziehungsweise Genauigkeit wird das Objekt detektiert.

Da die Anzahl der emittierten Photonen pro Laserpuls linear mit der emittierten Leistung skaliert, kann die Reichweite erhöht werden, indem die Leistung der emittierten Pulse erhöht wird. Mit steigender emittierter Leistung kann jedoch auch der schädigende Einfluss kohärenter Laserstrahlung und insbesondere das Risiko einer Augenschädigung, beispielsweise von Passanten, ansteigen. Um dem wiederum entgegenzuwirken, könnten die Strahldurchmesser der emittierten Laserstrahlen vergrößert werden, was jedoch insbesondere das räumliche Auffassungsvermögen des Systems reduziert würde.

Andere Lidarsensorsysteme basieren auf einer Frequenzmodulation des emittierten Lichts. Dabei werden, ähnlich wie bei FMCW-Radarsystemen, Frequenzrampen emittiert und die reflektierte Strahlung mit einem Lokaloszillator in den niederfrequenten Bereich konvertiert. Die Erzeugung von Frequenzrampen im Bereich zwischen 100 THz und 400 THz stellt jedoch hohe Anforderungen an die Stabilität der Lasersysteme, um die Frequenzrampen rauscharm und in der notwendigen Signalqualität bereitzustellen. So muss die Frequenz für ein feines Distanzauflösungsvermögen möglichst stabil moduliert werden, was beispielsweise durch die Modulation der Laserwellenlänge realisiert werden kann. Daraus ergeben sich erhebliche Qualitätsansprüche an die verwendeten Laser und Optiken, was zu hohen Kosten führt.

Ferner ist es möglich, über eine Frequenz- und Phasenmessung den zurückgelegten Weg des reflektierten Lichts zu bestimmen. Hierbei ist bei typischerweise verwendeten Wellenlängen im Infrarotbereich eine Phasenmessung nur in einem sehr kleinen Abstandsintervall eindeutig ist.

Bekannte Lidarsysteme können störanfällig sein, insbesondere bei Wechselwirkungen mit anderen Lidarsystemen oder sonstigen Emissionsquellen. So können beispielsweise sogenannte Geisterziele als Wechselwirkungen mit räumlich benachbarten Systemen, beispielsweise in einem weiteren Fahrzeug eingesetzten Systemen, auftreten.

Gemäß dem Verfahren nach dem verbesserten Konzept werden die erste Pulsfolge und die zweite Pulsfolge im Allgemeinen an unterschiedlichen räumlichen Positionen aus dem optischen Sensorsystem in die Umgebung emittiert und der erste und der zweite Heterodyndetektor befinden sich ebenfalls an unterschiedlichen räumlichen Positionen. Dementsprechend kann der erste Abstand verschieden von dem zweiten Abstand sein. Indem die räumlichen Beziehungen der Austrittspositionen der ersten und der zweiten Pulsfolge sowie die räumlichen Position der Heterodyndetektoren bekannt sind, stehen der erste und der zweite Abstand jedoch stets in einer definierten Beziehung zueinander.

Durch die Erzeugung der ersten und der zweiten Pulsfolge basierend auf der initialen Pulsfolge wie beschrieben werden effektiv zwei spektral kodierte Emissionskanäle realisiert, die auch als zwei verschiedene Sendeeinheiten des aktiven optischen Sensorsystems ausgestaltet sein können, wobei beispielsweise eine erste Sendeeinheit die erste Pulsfolge emittiert und die zweite Sendeeinheit die zweite Pulsfolge. Die erste und die zweite Pulsfolge können daher insbesondere räumlich getrennt voneinander emittiert werden.

Durch die erste und die zweite Referenzpulsfolge kann eine kohärente Detektion der reflektierten Anteile der ersten und der zweiten Pulsfolge anhand der ersten und der zweiten Heterodynmessung erreicht werden. Insbesondere fallen im Allgemeinen sowohl reflektierte Anteile der ersten Pulsfolge als auch reflektierte Anteile der zweiten Pulsfolge auf beide Heterodyndetektoren. Indem die beiden Heterodynmessungen mit unterschiedlichen Referenzpulsfolgen durchgeführt werden, die beiden Heterodyndetektoren also mit anderen Worten von unterschiedlichen Lokaloszillatoren gespeist werden, kann eine effektive Filterung der reflektierten Anteile erreicht werden, da jeweils nur die spektralen Anteile, welche der jeweiligen Referenzpulsfolge entsprechen, von dem jeweiligen Heterodyndetektor detektiert werden.

Durch die Kodierung der beiden Emissionskanäle kann eine Störanfälligkeit der Abstandsmessung aufgrund von weiteren Lichtquellen in der Umgebung des aktiven optischen Sensorsystems reduziert werden. Aufgrund der kohärenten Erzeugung und Detektion der Pulsfolgen kann eine zufällige Korrelation mit optischen Störquellen nahezu ausgeschlossen werden. Ist das aktive optische Sensorsystem beispielsweise Teil eines Sensorsystems eines Kraftfahrzeugs, so wird es durch die spektrale Kodierung also möglich, Strahlung von Lidarsystemen oder dergleichen, die auf anderen Kraftfahrzeugen in der Umgebung montiert sind, als solche zu erkennen und zu verwerfen.

Die initiale Pulsfolge wird frequenzabhängig gefiltert, insbesondere mittels eines Optiksystems des aktiven optischen Sensorsystems, um eine erste Zwischenpulsfolge mit dem ersten Frequenzspektrum und eine zweite Zwischenpulsfolge mit dem zweiten Frequenzspektrum zu erzeugen. Die erste Zwischenpulsfolge wird, insbesondere mittels des Optiksystems, beispielsweise mittels eines ersten Strahlteilers des Optiksystems, in die erste Pulsfolge und die erste Referenzpulsfolge geteilt. Die zweite Zwischenpulsfolge wird, insbesondere mittels des Optiksystems, beispielsweise mittels eines zweiten Strahlteilers des Optiksystems, in die zweite Pulsfolge und die zweite Referenzpulsfolge geteilt.

Durch die frequenzabhängige Filterung gefolgt von der Aufteilung der Zwischenpulsfolgen können die erste und die zweite Pulsfolge entsprechend phasenstabil und synchron zueinander erzeugt werden.

Gemäß zumindest einer Ausführungsform des Verfahrens nach dem verbesserten Konzept werden die erste Pulsfolge und die erste Referenzpulsfolge derart erzeugt, dass der erste Teil des Frequenzkamms Moden des Frequenzkamms beinhaltet, deren jeweilige Modenfrequenzen kleiner sind als eine vorgegebene Grenzfrequenz. Insbesondere beinhaltet der erste Teil des Frequenzkamms nur Moden, beispielsweise alle Moden, des Frequenzkamms, deren Modenfrequenzen kleiner sind als die Grenzfrequenz. Der zweite Teil des Frequenzkamms beinhaltet Moden des Frequenzkamms, deren Modenfrequenzen jeweils größer sind als die Grenzfrequenz. Insbesondere beinhaltet der zweite Teil des Frequenzkamms nur Moden, beispielsweise alle Moden, deren Modenfrequenzen größer sind als die Grenzfrequenz.

Sollte die Grenzfrequenz einer Modenfrequenz der Moden des Frequenzkamms entsprechen, so kann die entsprechende Mode entweder Teil des ersten Teils oder Teil des zweiten Teils des Frequenzkamms sein.

Gemäß zumindest einer Ausführungsform wird durch die erste Heterodynmessung ein erster Phasenunterschied zwischen einer Mode der ersten Referenzpulsfolge und einer Mode der von dem Objekt reflektierten Anteile der ersten Pulsfolge bestimmt, und der erste Abstand wird, insbesondere mittels einer Auswerteeinheit des aktiven optischen Sensorsystems, abhängig von dem ersten Phasenunterschied bestimmt.

Gemäß zumindest einer Ausführungsform wird durch die zweite Heterodynmessung ein zweiter Phasenunterschied zwischen einer Mode der zweiten Referenzpulsfolge und einer Mode der von dem Objekt reflektierten Anteile der zweiten Pulsfolge bestimmt, und der zweite Abstand wird, insbesondere mittels der Auswerteeinheit, abhängig von dem zweiten Phasenunterschied bestimmt.

Insbesondere kann der erste beziehungsweise der zweite Abstand gemäß dem Zusammenhang L = c * Φ / (4 π f_{D}) bestimmt werden, der sich aus dem Messprinzip der Heterodynmessung ergibt. Dabei entspricht L dem ersten beziehungsweise zweiten Abstand, c der Lichtgeschwindigkeit, Φ dem jeweiligen Phasenunterschied, also dem ersten und/oder dem zweiten Phasenunterschied, und f_{D} einem Frequenzunterschied der beiden vermessenen Moden, also einer Differenz zwischen der Modenfrequenz der Mode der ersten Referenzpulsfolge und der Mode der reflektierten Anteile der ersten Pulsfolge beziehungsweise einer Differenz zwischen der Modenfrequenz der Mode der zweiten Referenzpulsfolge und der Mode der reflektierten Anteile der zweiten Pulsfolge.

Da die einzelnen Moden der ersten Pulsfolge und der ersten Referenzpulsfolge beziehungsweise der zweiten Pulsfolge und der zweiten Referenzpulsfolge zueinander jeweils kohärent und synchron erzeugt werden, haben die in Rede stehenden Moden eine bekannte und konstante Frequenzbeziehung zueinander, der Unterschied in den Modenfrequenzen ist also näherungsweise zeitunabhängig. Die beschriebene erste Heterodynmessung und die beschriebene zweite Heterodynmessung kann auch für unterschiedliche Paare von Moden analog wie beschrieben durchgeführt werden, so dass eine genauere Bestimmung des ersten und des zweiten Abstands, beispielsweise durch Mittelwertbildung oder dergleichen, erzielbar ist.

Gemäß zumindest einer Ausführungsform werden durch die wenigstens eine erste Heterodynmessung für eine Vielzahl von ersten Modenpaaren ein jeweiliger erster Phasenunterschied und ein jeweiliger Frequenzunterschied, der betreffenden Modenfrequenzen bestimmt. Jedes der ersten Modenpaare besteht dabei aus einer Mode der ersten Referenzpulsfolge und einer Mode der von dem Objekt reflektierten Anteile der ersten Pulsfolge. Der erste Abstand wird, insbesondere mittels der Auswerteeinheit, durch lineare Näherung der ersten Phasenunterschiede als Funktion der ersten Frequenzunterschiede bestimmt.

Gemäß zumindest einer Ausführungsform werden durch die wenigstens eine zweite Heterodynmessung für eine Vielzahl von zweiten Modenpaaren ein jeweiliger zweiter Phasenunterschied und ein jeweiliger Frequenzunterschied, der betreffenden Modenfrequenzen bestimmt. Jedes der zweiten Modenpaare besteht dabei aus einer Mode der zweiten Referenzpulsfolge und einer Mode der von dem Objekt reflektierten Anteile der zweiten Pulsfolge. Der zweite Abstand wird, insbesondere mittels der Auswerteeinheit, durch lineare Näherung der zweiten Phasenunterschiede als Funktion der zweiten Frequenzunterschiede bestimmt.

Auf diese Weise kann durch die potentiell sehr hohe Anzahl der verfügbaren Moden und entsprechend der sehr hohen Anzahl der verfügbaren ersten und zweiten Modenpaare eine hochpräzise Bestimmung des ersten und zweiten Abstands durch die lineare Approximation mittels eines entsprechenden Optimierungsverfahrens zum Fitten des linearen Zusammenhangs bestimmt werden.

Insbesondere kann der Frequenzkamm beziehungsweise können der erste und der zweite Teil des Frequenzkamms tausende von Moden oder mehr beinhalten, so dass auch die Vielzahl von Modenpaaren, die mittels der ersten beziehungsweise zweiten Heterodynmessung vermessen werden, tausende oder mehr Modenpaare beinhalten kann.

Gemäß zumindest einer Ausführungsform wird die initiale Pulsfolge mit einer vorgegebenen Repetitionsfrequenz erzeugt, die in einem Bereich von 1 kHz bis 1 GHz liegt, beispielsweise in einem Bereich von 100 kHz bis 500 MHz, vorzugsweise in einem Bereich von 500 kHz bis 100 MHz.

Die Repetitionsfrequenz entspricht dabei insbesondere dem Frequenzabstand zweier benachbarter Moden innerhalb des Frequenzkamms und somit dem inversen zeitlichen Abstand zwischen zwei aufeinanderfolgenden Lichtpulsen der initialen Pulsfolge, insbesondere zwischen den jeweiligen Maxima der Einhüllenden der aufeinanderfolgenden Lichtpulse.

Die initiale Pulsfolge wird gemäß wenigstens einer Ausführungsform mit einer Zentralwellenlänge in einem Bereich von 740 nm bis 2000 nm erzeugt.

Die Zentralwellenlänge entspricht dabei insbesondere der Wellenlänge eines Zentrums der Einhüllenden im Frequenzraum. Bei solchen Pulsfolgen liegt zwar die der Zentralwellenlänge entsprechende Frequenz im dreistelligen THz-Bereich, der Frequenzabstand benachbarter Moden jedoch im ein- bis dreistelligen MHz-Bereich oder darunter. Da im Rahmen der Heterodynmessungen durch die kohärente Überlagerung der entsprechend herangezogenen Pulsfolgen eine Heruntermischung in die elektrische Domäne erfolgt, muss die Auswerteeinheit lediglich Signale mit Frequenzen im MHz-Bereich oder darunter verarbeiten. Dadurch kann eine weitaus kostengünstigere Realisierung des aktiven optischen Sensorsystems und/oder eine genauere Messung erreicht werden.

Eine Pulsdauer der Lichtpulse der initialen Pulsfolge kann beispielsweise im ns- bis ps-Bereich liegen. Praktisch wird beispielsweise beim Einsatz von modengekoppelten Lasern als Laserquelle die Pulsdauer durch die Anzahl der kohärent überlappenden Moden bestimmt. Da die Anzahl der Moden des Frequenzkamms durch das Verhältnis der inversen Repetitionsfrequenz zu der Pulsfolge entspricht, ist ein Frequenzkamm mit mehreren tausend oder mehreren zehntausend Moden realistisch.

Gemäß dem verbesserten Konzept wird auch ein aktives optisches Sensorsystem, insbesondere ein aktives optisches Sensorsystem für ein Kraftfahrzeug, zur Abstandsmessung angegeben. Das aktive optische Sensorsystem weist eine Laserquelle auf sowie eine Steuereinheit, die dazu eingerichtet ist, die Laserquelle zum Erzeugen einer initialen Pulsfolge mit einem initialen Frequenzspektrum, welches einem Frequenzkamm entspricht, anzusteuern. Das aktive optische Sensorsystem weist ein Optiksystem auf, das dazu eingerichtet und angeordnet ist, basierend auf der initialen Pulsfolge eine erste Pulsfolge mit einem ersten Frequenzspektrum, das einem ersten Teil des Frequenzkamms entspricht, und eine erste Referenzpulsfolge mit dem ersten Frequenzspektrum zu erzeugen. Das Optiksystem ist dazu eingerichtet und angeordnet, basierend auf der initialen Pulsfolge eine zweite Pulsfolge mit einem zweiten Frequenzspektrum, das einem von dem ersten Teil verschiedenen zweiten Teil des Frequenzkamms entspricht, und eine zweite Referenzpulsfolge mit dem zweiten Frequenzspektrum zu erzeugen. Das Optiksystem ist dazu eingerichtet und angeordnet, die erste Pulsfolge und die zweite Pulsfolge in Richtung eines Objekts in einer Umgebung des aktiven optischen Sensorsystems, insbesondere des Kraftfahrzeugs, zu emittieren. Das aktive optische Sensorsystem weist einen ersten Heterodyndetektor auf, der dazu eingerichtet und angeordnet ist, ein erstes elektrisches Signal basierend auf der ersten Referenzpulsfolge und basierend auf von dem Objekt reflektierten Anteilen der ersten Pulsfolge zu erzeugen. Das aktive optische Sensorsystem weist einen zweiten Heterodyndetektor auf, der dazu eingerichtet und angeordnet ist, ein zweites elektrisches Signal basierend auf der zweiten Referenzpulsfolge und von dem Objekt reflektierten Anteilen der zweiten Pulsfolge zu erzeugen. Das Sensorsystem weist außerdem eine Auswerteeinheit auf, die dazu eingerichtet ist, abhängig von dem wenigstens einen ersten elektrischen Signal einen ersten Abstand des Objekts von dem Sensorsystem zu bestimmen und abhängig von dem wenigstens einen zweiten elektrischen Signal einen zweiten Abstand des Objekts von dem Sensorsystem zu bestimmen.

Das Optiksystem kann eine oder mehrere Komponenten zur optischen Strahlführung, einen oder mehrere optische Filter, Strahlteiler, Lichtleiter, Linsen, Spiegel und so weiter beinhalten.

Das Optiksystem weist eine optische Filtereinheit auf, die dazu eingerichtet und angeordnet ist, die initiale Pulsfolge frequenzabhängig zu filtern, um eine erste Zwischenpulsfolge mit den ersten Frequenzspektrum zu erzeugen und um eine zweite Zwischenpulsfolge mit dem zweiten Frequenzspektrum zu erzeugen. Das Optiksystem weist einen ersten Strahlteiler auf, der angeordnet ist, die erste Zwischenpulsfolge in die erste Pulsfolge und die erste Referenzpulsfolge zu teilen. Zusätzlich weist das Optiksystem einen zweiten Strahlteiler auf, der angeordnet ist, die zweite Zwischenpulsfolge in die zweite Pulsfolge und die zweite Referenzpulsfolge zu teilen.

Gemäß zumindest einer Ausführungsform des aktiven optischen Sensorsystems beinhaltet die Laserquelle einen modengekoppelten Laser.

Durch den modengekoppelten Laser kann durch kohärente Überlagerung einer Vielzahl von Lasermoden direkt die initiale Pulsfolge erzeugt werden.

In alternativen Ausführungsformen kann die Laserquelle auch einen oder mehrere Dauerstrichlaser, auch als CW-Laser bezeichnet, beinhalten und einen oder mehrere Modulatoreinheiten, um das von dem oder den Dauerstrichlasern emittierte Licht zu modulieren und dadurch die initiale Pulsfolge zu erzeugen. Zur optischen Modulation kommen dazu beispielsweise Mach-Zehnder-Modulatoren und/oder akustooptische Modulatoren in Frage.

Im Folgenden werden Ausführungsbeispiele der Erfindung beschrieben. Hierzu zeigt:
- Fig. 1: eine schematische Darstellung eines Kraftfahrzeugs mit einer beispielhaften Ausführungsform eines aktiven optischen Sensorsystems nach dem verbesserten Konzept;
- Fig. 2: eine schematische Blockdarstellung einer weiteren beispielhaften Ausführungsform eines aktiven optischen Sensorsystems nach dem verbesserten Konzept;
- Fig. 3: eine initiale Pulsfolge sowie ein zugehöriges Frequenzspektrum;
- Fig. 4: ein schematisches Ablaufdiagramm einer beispielhaften Ausführungsform eines Verfahrens nach dem verbesserten Konzept;
- Fig. 5: eine schematische Darstellung einer beispielhaften Ausführungsform eines Heterodyndetektors;
- Fig. 6: eine schematische Darstellung der Messung eines Phasenunterschieds gemäß einer Heterodynmessung; und
- Fig. 7: eine weitere schematische Darstellung der Messung eines Phasenunterschieds gemäß einer Heterodynmessung.

Bei den im Folgenden erläuterten Ausführungsbeispielen handelt es sich um bevorzugte Ausführungsbeispiele der Erfindung.

In den Figuren sind funktionsgleiche Elemente jeweils mit denselben Bezugszeichen versehen.

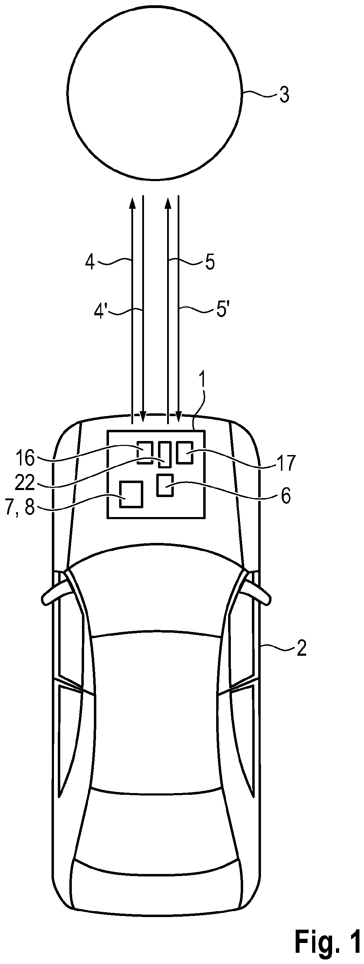

In Fig. 1 ist schematisch ein Kraftfahrzeug 2 dargestellt, das eine beispielhafte Ausführungsform eines aktiven optischen Sensorsystems 1 gemäß dem verbesserten Konzept aufweist.

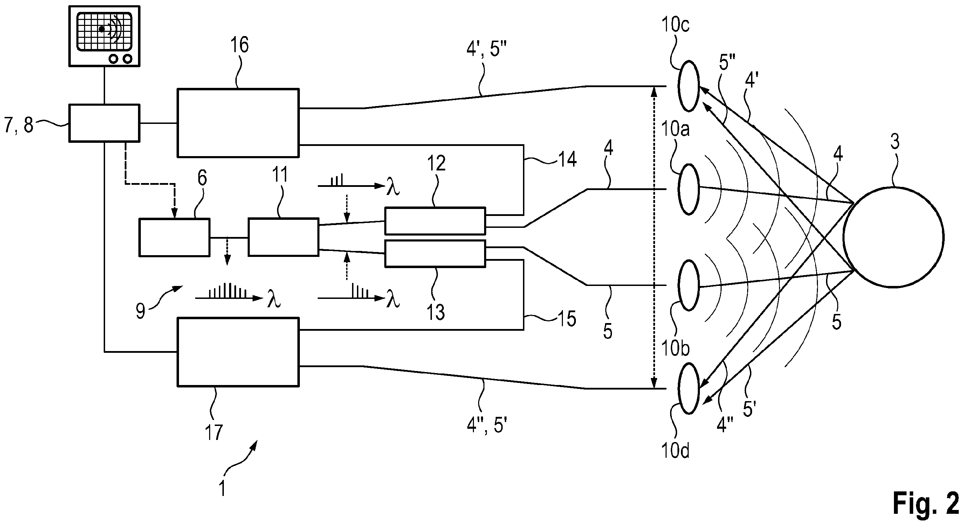

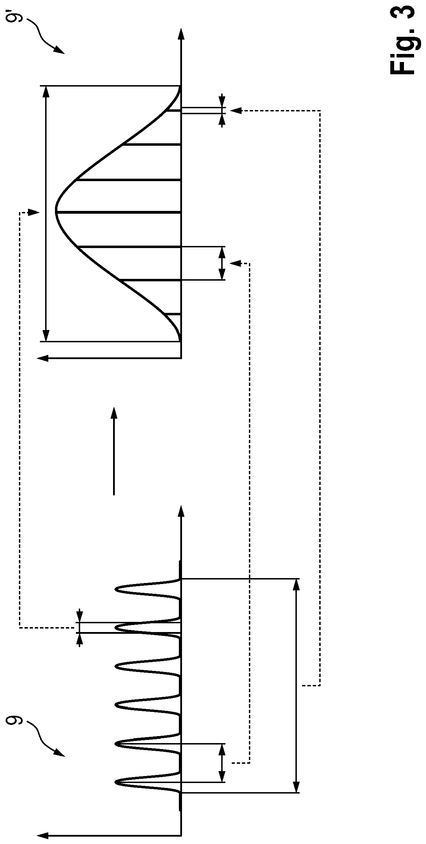

Das Sensorsystem 1 beinhaltet eine Laserquelle 6, insbesondere eine Infrarotlaserquelle, und eine Steuereinheit 7, die mit der Laserquelle 6 gekoppelt ist, um diese anzusteuern, so dass die Laserquelle 6 eine initiale Pulsfolge 9 mit einem initialen Frequenzspektrum 9', wie schematisch in Fig. 3 dargestellt, erzeugt. Das Sensorsystem 1 weist außerdem ein Optiksystem 22 auf, um basierend auf der initialen Pulsfolge 9 eine erste Pulsfolge 4 und eine zweite Pulsfolge 5 zu erzeugen und in die Umgebung des Kraftfahrzeugs 2 in Richtung eines Objekts 3 zu emittieren. Die erste Pulsfolge 4 weist dabei ein erstes Frequenzspektrum auf, das einem ersten Teil des Frequenzkamms entspricht, und die zweite Pulsfolge 5 weist ein zweites Frequenzspektrum auf, das einem zweiten Teil des Frequenzkamms entspricht. Darüber hinaus ist das Optiksystem 22 dazu eingerichtet, eine erste Referenzpulsfolge 14 mit dem ersten Frequenzspektrum und eine zweite Referenzpulsfolge 15 (siehe Fig. 2) mit dem zweiten Frequenzspektrum zu erzeugen.

In der Umgebung des Kraftfahrzeugs 2 können die emittierten Pulsfolgen 4, wenigstens zum Teil 5 von dem Objekt 3 reflektiert werden und entsprechend reflektierte Anteile 4`, 5' können mittels des Sensorsystems 1 detektiert werden. Hierzu weist das Sensorsystem 1 einen Heterodyndetektor 16 und einen zweiten Heterodyndetektor 17 auf.

Der erste Heterodyndetektor 16 erhält als Lokaloszillatorsignal die erste Referenzpulsfolge 14 und kann daher basierend auf der ersten Referenzpulsfolge 14 und den reflektierten Anteilen 4' der ersten Pulsfolge 4 durch eine Heterodynmessung ein erstes elektrisches Signal erzeugen, wohingegen der erste Heterodyndetektor 16 durch die Verwendung der ersten Referenzpulsfolge als Lokaloszillatorsignal gegebenenfalls empfangene reflektierte Anteile der zweiten Pulsfolge 5 aufgrund der abweichenden Frequenzspektren nicht detektiert.

Analog dazu erhält der zweite Heterodyndetektor 17 erhält als Lokaloszillatorsignal die zweite Referenzpulsfolge 15 und kann basierend auf der zweiten Referenzpulsfolge 15 und den reflektierten Anteilen 5' der zweiten Pulsfolge 5 durch eine weitere Heterodynmessung ein zweites elektrisches Signal erzeugen. Gegebenenfalls empfangene reflektierte Anteile der ersten Pulsfolge 4 detektiert der zweite Heterodyndetektor 17 dagegen nicht.

Das Sensorsystem weist außerdem eine Auswerteeinheit 8 auf, die mit den Heterodyndetektoren 16 und 17 gekoppelt ist, um das erste und das zweite elektrische Signal zu erhalten. Die Auswerteeinheit 8 ist dazu eingerichtet, abhängig von dem ersten elektrischen Signal einen ersten Abstand des Objekts 3 von dem Sensorsystem 1 zu bestimmen und abhängig von dem zweiten elektrischen Signal einen zweiten Abstand des Objekts 3 von dem Sensorsystem 1.

In verschiedenen Ausgestaltungsformen kann das Sensorsystem 1 eine gemeinsame Steuer- und Auswerteeinheit aufweisen, die sowohl die Steuereinheit 7 als auch die Auswerteeinheit 8 beinhaltet beziehungsweise deren Funktionalitäten besitzt.

In Fig. 2 ist eine beispielhafte Ausführungsform eines aktiven optischen Sensorsystems 1 gemäß dem verbesserten Konzept schematisch dargestellt, wie es beispielsweise für ein Kraftfahrzeug 2 wie in Fig. 1 dargestellt eingesetzt werden kann.

In dieser Ausführungsform ist die Laserquelle 6 beispielsweise als modengekoppelter Laser ausgestaltet und kann daher direkt eine Vielzahl von Lasermoden kohärent erzeugen, um die initiale Pulsfolge 9 zu erzeugen.

Das Optiksystem 22 weist eine optische Filtereinheit 11 auf, welche die initiale Pulsfolge 9 eingangsseitig erhält und frequenzabhängig filtern kann, um eine erste Zwischenpulsfolge mit dem ersten Frequenzspektrum und eine zweite Zwischenpulsfolge mit dem zweiten Frequenzspektrum zu erzeugen. Das Optiksystem 22 weist einen ersten Strahlteiler 12 und einen zweiten Strahlteiler 13 auf. Der erste Strahlteiler 12 erhält von der optischen Filtereinheit 11 die erste Zwischenpulsfolge und teilt diese kohärent in die erste Pulsfolge 4 und die erste Referenzpulsfolge 14. Analog erhält der zweite Strahlteiler 13 von der optischen Filtereinheit 11 die zweite Zwischenpulsfolge und teilt diese kohärent in die zweite Pulsfolge 12 und die zweite Referenzpulsfolge 15.

Das Optiksystem 22 kann beispielsweise eine erste Linseneinheit 10a aufweisen, mittels der die erste Pulsfolge 4 in die Umgebung emittiert werden kann. Dementsprechend kann das Optiksystem auch eine zweite Linseneinheit 10b enthalten, mittels der sie die zweite Pulsfolge 5 in die Umgebung emittieren kann. Die erste und die zweite Linseneinheit 10a, 10b können dabei an räumlich unterschiedlichen Positionen angeordnet sein, so dass die erste und die zweite Pulsfolge 4, 5 an unterschiedlichen Positionen aus dem Sensorsystem 1 austreten.

An dem Objekt 3 können die erste Pulsfolge und die zweite Pulsfolge 5 wie bereits erwähnt wenigstens teilweise reflektiert werden. Zum Empfangen der entsprechenden reflektierten Anteile kann das Optiksystem 22 eine dritte Linseneinheit 10c und eine vierte Linseneinheit 10d aufweisen, die ebenfalls an unterschiedlichen räumlichen Positionen angeordnet sein können. Auf diese Weise kann das Sensorsystem 1 beispielsweise erste reflektierte Anteile 4' der ersten Pulsfolge 4 über die dritte Linseneinheit 10c empfangen und über die vierte Linseneinheit 10d erste reflektierte Anteile 5' der zweiten Pulsfolge 5. Darüber hinaus kann das Sensorsystem 1 über die dritte Linseneinheit 10c auch zweite reflektierte Anteile 5" der zweiten Pulsfolge 5 empfangen und über die vierte Linseneinheit 10d zweite reflektierte Anteile 4" der ersten Pulsfolge 4.

Der erste Heterodyndetektor 16 erhält nun als Lokaloszillatorsignal die erste Referenzpulsfolge 14 und als Messsignal die mittels der dritten Linseneinheit 10c detektierten ersten reflektierten Anteile 4' der ersten Pulsfolge 4 sowie die zweiten reflektierten Anteile 5" der zweiten Pulsfolge 5. Analog erhält der zweite Heterodyndetektor 17 als Lokaloszillatorsignal die zweite Referenzpulsfolge 15 und als Messsignal die ersten reflektierten Anteile 5' der zweiten Pulsfolge 5 sowie die zweiten reflektierten Anteile 4" der ersten Pulsfolge 4.

Durch diese Wahl der Lokaloszillatorsignale erfolgt in den Heterodyndetektoren 16, 17 eine inhärente Filterung der Messsignale. Da die erste Referenzpulsfolge 14 das erste Frequenzspektrum aufweist, die zweiten reflektierten Anteile 5" der zweiten Pulsfolge 5 jedoch das zweite Frequenzspektrum, das insbesondere mit dem ersten Frequenzspektrum nicht überlappt, werden die zweiten reflektierten Anteile 5" als unerwünschte Anteile herausgefiltert. Analoges gilt für die Heterodynmessung mittels des zweiten Heterodyndetektors 17.

In Fig. 3 sind, wie bereits erwähnt, schematisch die initiale Pulsfolge 9 und das entsprechende initiale Frequenzspektrum 9' dargestellt. Wie angedeutet, entspricht eine spektrale Bandbreite der einzelnen Moden des initialen Frequenzspektrums 9' der inversen zeitlichen Dauer des durch die initiale Pulsfolge 9 gebildeten Pulszugs. Die Repetitionsfrequenz, also die inverse Zeitdauer zwischen zwei aufeinanderfolgenden Lichtpulsen, entspricht im Frequenzraum dem Abstand zweier benachbarter Moden. Die Pulsdauer eines Lichtpulses der initialen Pulsfolge 9 entspricht schließlich der inversen spektralen Bandbreite des gesamten initialen Frequenzspektrums 9'.

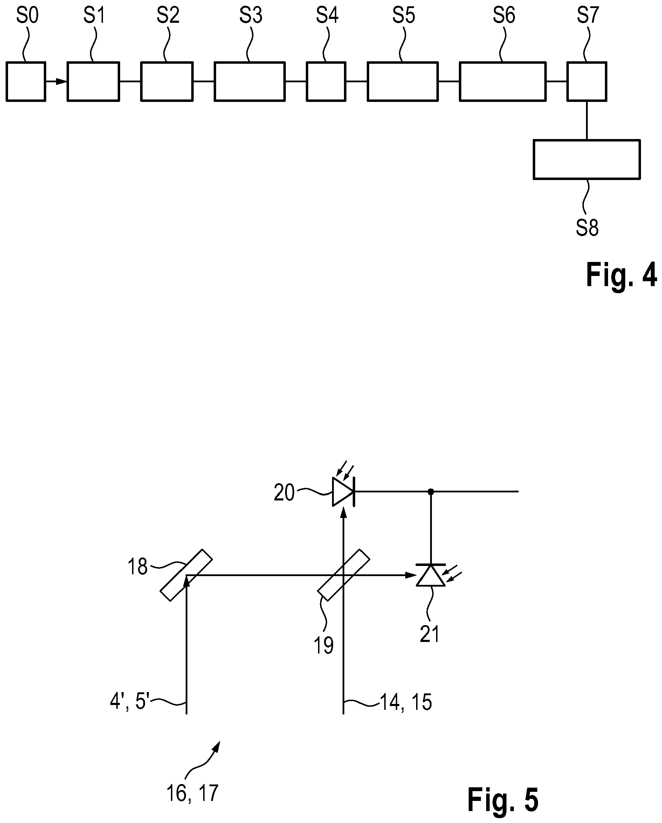

In Fig. 4 ist schematisch ein Ablaufdiagramm einer beispielhaften Ausführungsform eines Verfahrens zur Abstandsmessung mittels eines aktiven optischen Sensorsystems 1 nach dem verbesserten Konzept dargestellt. In Schritt S0 des Verfahrens werden, wie bezüglich Fig. 2 beschrieben, die erste und die zweite Pulsfolge 4, 5 emittiert, die entsprechenden reflektierten Anteile 4', 4", 5', 5" empfangen und von den Heterodyndetektoren 16, 17 detektiert. Dementsprechend erzeugen die Heterodyndetektoren 16, 17 entsprechende elektrische Ausgangssignale und übermitteln diese an die Auswerteeinheit 8. Die elektrischen Ausgangssignale können mittels der Auswerteeinheit 8 beispielsweise in entsprechende Digitalsignale konvertiert werden. Die Schritte S1 bis S8 können als digitale Signalverarbeitungsschritte mittels der Auswerteeinheit 8 aufgefasst werden.

In Schritt S1 führt die Auswerteeinheit 8 eine Pulsauswahl für die Auswertung durch. Die Anzahl der Pulse ist dabei frei wählbar. Je mehr Pulse für die Auswertung verwendet werden, desto geringer ist, wie oben beschrieben, die spektrale Pulsbreite einer einzelnen Mode. Der optionale Schritt S2 entspricht einem ersten Gating oder einem ersten digitalen Filterschritt. Hier können unerwünschte statische Reflexionen aus dem Messsignal entfernt werden. Der optionale Schritt S3 kann einem zweiten Gating oder einem zweiten digitalen Filterschritt entsprechen. Hier kann beispielsweise das Rauschen außerhalb der erwarteten Pulse aus dem Messsignal entfernt werden. In Schritt S4 kann eine Fourier-Transformation der digitalen Signale durchgeführt werden.

Im optionalen Schritt S5 kann eine Mitten-Frequenz des entsprechenden Frequenzspektrums des Messsignals bestimmt werden. Durch Vergleich mit der Mitten-Frequenz des entsprechenden Lokaloszillatorsignals kann eine Relativgeschwindigkeit des Objekts 3 zu dem Sensorsystem 1 berechnet werden.

In Schritt S6 kann die jeweilige Kammposition des jeweiligen Messsignals und des jeweiligen Lokaloszillatorsignals bestimmt werden, und deren Phasenlagen zueinander können bestimmt werden. In Schritt S7 kann basierend darauf beispielsweise eine mittlere Phasenverschiebung bestimmt werden. In Schritt S8 kann basierend auf der mittleren Phasenverschiebung dementsprechend der entsprechende Abstand des Objekts bestimmt werden.

In Fig. 5 ist schematisch das Prinzip einer Heterodynmessung mittels eines der Heterodyndetektoren 16, 17 dargestellt.

Der jeweilige Heterodyndetektor 16, 17 weist beispielsweise einen Spiegel 18 auf und einen Strahlteiler 19. Außerdem kann der Heterodyndetektor 16, 17 einen ersten optischen Detektor 20 und einen zweiten optischen Detektor 21 aufweisen. Die optischen Detektoren 20, 21 können beispielsweise als Photodioden ausgestaltet sein.

Die jeweils relevanten reflektierten Anteile 4`, 5', also im Falle des ersten Heterodyndetektors 16 die ersten reflektierten Anteile 4' der ersten Pulsfolge 4 und im Falle des zweiten Heterodyndetektors 17 die ersten reflektierten Anteile 5' der zweiten Pulsfolge 5, werden über den Spiegel 18 auf den Strahlteiler 19 geleitet. Das jeweilige Lokaloszillatorsignal, also im Falle des ersten Heterodyndetektors 16 die erste Referenzpulsfolge 14 und im Falle des zweiten Heterodyndetektors 17 die zweite Referenzpulsfolge 15, wird ebenfalls auf den Strahlteiler 19 geleitet, insbesondere derart, dass es mit dem jeweiligen Messsignal einen Winkel von 90° einschließt. Dementsprechend sind die optischen Detektoren 20, 21 derart bezüglich des Strahlteilers 19 angeordnet, dass sie jeweils eine kohärente Überlagerung des jeweiligen Messsignals mit dem jeweiligen Lokaloszillatorsignal empfangen. Durch die Reflexion an dem Strahlteiler 19 kommt es zu einem zusätzlichen Phasensprung um 180°.

Am Ausgang des Heterodyndetektors 16, 17 kann dann eine Differenz der beiden Photoströme der optischen Detektoren 20, 21 gemessen werden. Eine Komponente des Photostroms, die auf Überlagerung einer bestimmten Mode des Messsignals mit einer bestimmten Mode des Lokaloszillatorsignals beruht, ist dabei proportional zu cos(2π f_{D}t + Φ). Dabei stellt f_{D} den Frequenzunterschied der beiden Moden dar, Φ deren Phasenunterschied und t bezeichnet die Zeit.

Dies bedeutet, dass die Frequenzdifferenzen im Frequenzraum detektierbar sind. Da der initiale Frequenzkamm im Allgemeinen aus tausenden oder mehr Moden besteht, ergibt sich die Möglichkeit, eine Vielzahl von Messungen durchzuführen, wobei jeweils Φ = 4π f_{D}L/c gilt. Die gemessenen Phasen- und Frequenzunterschiede stehen also in einem linearen Zusammenhang, wobei der Abstand L der Steigung entspricht. Durch lineare Approximation kann aufgrund der Vielzahl der gemessenen Frequenz- und Phasenunterschiede mittels eines Optimierungsverfahrens, also mittels eines linearen Fits, der jeweilige Abstand hochpräzise bestimmt werden. Die Messung der Dopplerverschiebung der heruntergemischten Trägerfrequenz ermöglicht darüber hinaus die optionale Bestimmung der Geschwindigkeit des Objekts 3.

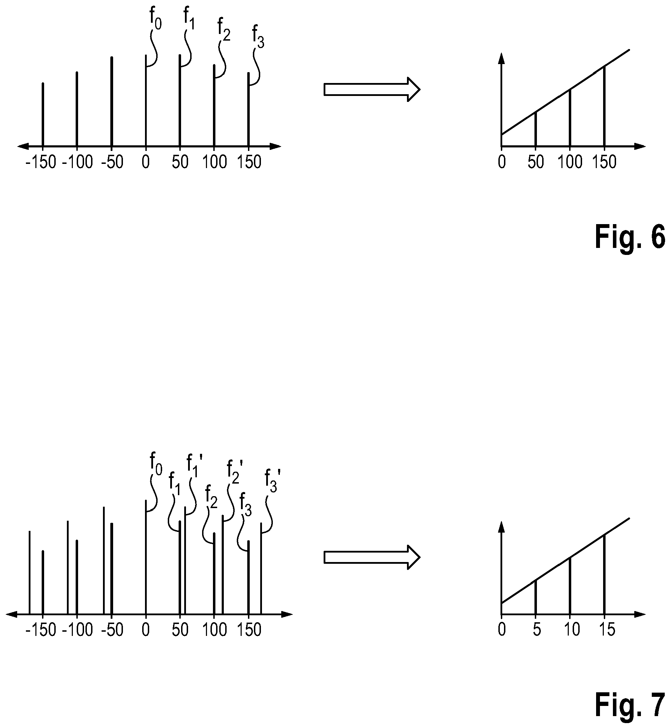

In Fig. 6 und Fig. 7 ist die Messung des Phasenunterschieds schematisch nochmals dargestellt. In Fig. 6 ist links eine Vielzahl von Moden im Frequenzraum dargestellt, wobei auf der Abszisse die Frequenz in beliebigen Einheiten aufgetragen ist. Eine Mode des Lokaloszillatorsignals hat eine Frequenz f₀ und drei beispielhafte Moden des Messsignals haben Frequenzen f₁, f₂ und f₃. Die Moden haben beispielsweise einen konstanten Abstand von fünfzig zueinander. Rechts ist dementsprechend die wie beschrieben gemessene Phasenverschiebung zwischen der Mode mit der Frequenz f₀ und den Moden mit den Frequenzen f₁, f₂ und f₃ als Funktion des jeweiligen Frequenzunterschieds zu der Mode mit der Frequenz f₀ aufgetragen. Die Steigung des linearen Zusammenhangs liefert den Abstand.

In Fig. 7 wird eine Situation betrachtet, in der das Lokaloszillatorsignal leicht verstimmt wird, so dass zueinander leicht verstimmte Frequenzkämme untersucht werden können. Das Lokaloszillatorsignal hat dementsprechend Moden mit Frequenzen f₀, f_{1'}, f_{2'} und f_{3'}, und das Messsignal hat Moden mit den Frequenzen f₁, f₂ und f₃.

In diesem Fall können die jeweils zueinander leicht verstimmten Modenpaare zur Bestimmung der jeweiligen Phasendifferenz herangezogen werden. Es wird also die Phasendifferenz zwischen der Mode mit der Frequenz f₁ und der Mode mit der Frequenz f_{1'} bestimmt und so weiter. Dementsprechend können die Frequenzunterschiede im Vergleich zu der Situation in Fig. 6 noch einmal deutlich verringert werden, was vorteilhaft für die einfachere elektronische Signalverarbeitung ist.

Wie insbesondere hinsichtlich der Figuren beschrieben, wird durch das verbesserte Konzept eine störunanfällige Messung des Abstands von Objekten mit hoher Reichweite und unter Einsatz kostengünstiger elektronischer Komponenten ermöglicht. Das verbesserte Konzept beruht dabei auf einer quantenmetrologischen Abstandsmessung mittels zweier optischer Teilfrequenzkämme, die kohärent aus einem Frequenzkamm erzeugt werden. Es kann beispielsweise das reflektierte Signal mit einem lokalen, nicht emittierten Frequenzkamm an einer entsprechenden Photodiode überlagert werden, und die niederfrequente Schwebungsfrequenz sowie der Phasenunterschied können mit einem Heterodyndetektionssystem gemessen werden. Der Abstand kann abhängig von der Schwebungsfrequenz und der Phase bestimmt werden.

Lidarsysteme können beispielsweise im Wellenlängenbereich zwischen 740 nm und 2000 nm betrieben werden. Damit liegen die Frequenzen der emittierten Strahlung in einem Bereich zwischen 140 THz und 400 THz, was besondere Herausforderungen an eine direkte Frequenzmessung stellt und üblicherweise nur mit sehr kostenintensiven Geräten durchgeführt werden kann. Die Detektion der emittierten Strahlung erfolgt beispielsweise mittels Photodioden, welchen einen Photostrom messen, der proportional zum Absolutquadrat des empfangenen elektrischen Feldes ist. Somit ist eine Frequenz- oder Phasenmessung der eingestrahlten Lichtquelle nur eindeutig im Intervall von 0 bis 180°, dem sogenannten Halbzyklus. Daraus ergibt sich die sogenannte Eindeutigkeitslänge als c/(2f) für den Abstand zweier Objekte, welche getrennt detektiert werden können. Für eine Wellenlänge von 1550 nm ergäbe sich eine Eindeutigkeitslänge von 777 nm. Allerdings wird die Eindeutigkeitslänge für kleiner werdende Frequenzen f groß. Für Frequenzen im MHz-Bereich können Werte für die Eindeutigkeitslänge erreicht werden, welche den Anforderungen für automatische Fahrfunktionen genügen und beispielsweise größer als 100 m sein können. Da diese Frequenzen im MHz-Bereich, kann auf eine kostengünstige Elektronik zur Signalverarbeitung zurückgegriffen werden.

Gemäß dem verbesserten Konzept wird die THz-Strahlung effektiv frequenzkonvertiert und zur Abstandsmessung verwendet. In gepulsten Lasersystemen kann die Repetitionsrate üblicherweise im MHz-Bereich oder darunter liegen. Zwar liegt die Frequenz der einzelnen Moden dann beispielsweise im THz-Bereich, allerdings befindet sich der Frequenzabstand der Kammmoden im MHz-Bereich oder darunter. Durch die Messung von Differenzfrequenzen zweier Moden kann somit die Frequenzkonversion in den MHz-Bereich oder darunter erzielt werden.

Durch die Heterodynmessungen können beispielsweise Differenzen von Photoströmen zweier Photodioden gemessen werden. Dies hat zur Folge, dass zeitunabhängige Anteile des Photostroms wegfallen, was die Auswertung vereinfacht.

Die Erzeugung des initialen Frequenzkamms beziehungsweise der initialen Pulsfolge kann durch einen modengekoppelten Laser oder durch externe Modulation eines Dauerstrichsignals erzeugt werden. In verschiedenen Ausführungsformen können beispielsweise akustooptische Modulatoren und/oder Mach-Zehnder-Modulatoren eingesetzt werden.

In verschiedenen Ausgestaltungsformen kann die initiale Pulsfolge optisch verstärkt werden, um die notwendige Sendeleistung zu erreichen. Hierzu kommen beispielsweise Erbiumdotierte Faserverstärker, EDFA, oder auf Halbleiterbasis arbeitende optische Verstärker, SOA, in Frage.

In verschiedenen Ausführungsformen kann durch Messung der Dopplerverschiebung der heruntergemischten Trägerfrequenz die Geschwindigkeit des Objekts relativ zu dem Sensorsystem bestimmt werden.

### Bezugszeichenliste

- 1: aktives optisches Sensorsystem
- 2: Kraftfahrzeug
- 3: Objekt
- 4, 5: Pulsfolgen
- 4', 5', 4", 5": reflektierte Anteile
- 6: Laserquelle
- 7: Steuereinheit
- 8: Auswerteeinheit
- 9: Pulsfolge
- 9': Frequenzspektrum
- 10a, 10b, 10c, 10d: Linseneinheiten
- 11: optische Filtereinheit
- 12,13: Strahlteiler
- 14, 15: Referenzpulsfolgen
- 16, 17: Heterodyndetektoren
- 18: Spiegel
- 19: Strahlteiler
- 20, 21: Photodetektoren
- 22: Optikeinheit
- S0 bis S8: Verfahrensschritte

## Patentansprüche

1. Verfahren zur Bestimmung eines ersten Abstands und eines zweiten Abstands eines Objekts (3) von einem aktiven optischen Sensorsystem (1) mittels des Sensorsystems (1), wobei mittels einer Laserquelle (6) eine initiale Pulsfolge (9) mit einem initialen Frequenzspektrum (9'), das einem Frequenzkamm entspricht, erzeugt wird, wobei der Frequenzkamm eine Vielzahl von Moden mit einer jeweiligen Modenfrequenz aufweist, wobei
- basierend auf der initialen Pulsfolge (9) eine erste Pulsfolge (4) mit einem ersten Frequenzspektrum, das einem ersten Teil des Frequenzkamms entspricht, und eine erste Referenzpulsfolge (14) mit dem ersten Frequenzspektrum erzeugt werden;
- basierend auf der initialen Pulsfolge (9) eine zweite Pulsfolge (5) mit einem zweiten Frequenzspektrum, das einem von dem ersten Teil verschiedenen zweiten Teil des Frequenzkamms entspricht, und eine zweite Referenzpulsfolge (15) mit dem zweiten Frequenzspektrum erzeugt werden;
- die initiale Pulsfolge (9) frequenzabhängig gefiltert wird, um eine erste Zwischenpulsfolge mit dem ersten Frequenzspektrum und eine zweite Zwischenpulsfolge mit dem zweiten Frequenzspektrum zu erzeugen;
- die erste Zwischenpulsfolge in die erste Pulsfolge (4) und die erste Referenzpulsfolge (14) geteilt wird; und
- die zweite Zwischenpulsfolge in die zweite Pulsfolge (5) und die zweite Referenzpulsfolge (15) geteilt wird;
- die erste Pulsfolge (4) und die zweite Pulsfolge (5) in Richtung des Objekts (3) emittiert werden;
- der erste Abstand des Objekts (3) von dem Sensorsystem (1) mittels wenigstens einer ersten Heterodynmessung basierend auf der ersten Referenzpulsfolge (14) und von dem Objekt (3) reflektierten Anteilen der ersten Pulsfolge (4) bestimmt wird; und
- der zweite Abstand des Objekts (3) von dem Sensorsystem (1) mittels wenigstens einer zweiten Heterodynmessung basierend auf der zweiten Referenzpulsfolge (15) und von dem Objekt (3) reflektierten Anteilen der zweiten Pulsfolge (5) bestimmt wird.

2. Verfahren nach Anspruch 1,
**dadurch gekennzeichnet, dass**
- der erste Teil des Frequenzkamms Moden des Frequenzkamms beinhaltet, deren Modenfrequenzen kleiner sind als eine vorgegebene Grenzfrequenz; und
- der zweite Teil des Frequenzkamms Moden des Frequenzkamms beinhaltet, deren Modenfrequenzen größer sind als die Grenzfrequenz.

3. Verfahren nach einem der vorhergehenden Ansprüche,
**dadurch gekennzeichnet, dass**
- durch die wenigstens eine erste Heterodynmessung ein erster Phasenunterschied zwischen einer Mode der ersten Referenzpulsfolge und einer Mode der von dem Objekt (3) reflektierten Anteile der ersten Pulsfolge (4) bestimmt wird und der erste Abstand abhängig von dem ersten Phasenunterschied bestimmt wird; und/oder
- durch die wenigstens eine zweite Heterodynmessung ein zweiter Phasenunterschied zwischen einer Mode der zweiten Referenzpulsfolge und einer Mode der von dem Objekt (3) reflektierten Anteile der zweiten Pulsfolge (4) bestimmt wird und der zweite Abstand abhängig von dem zweiten Phasenunterschied bestimmt wird.

4. Verfahren nach einem der Ansprüche 1 oder 2,
**dadurch gekennzeichnet, dass**
- durch die wenigstens eine erste Heterodynmessung für eine Vielzahl von ersten Modenpaaren, wobei jedes der ersten Modenpaare aus einer Mode der ersten Referenzpulsfolge und einer Mode der von dem Objekt (3) reflektierten Anteile der ersten Pulsfolge (4) besteht, ein jeweiliger erster Phasenunterschied und ein jeweiliger erster Frequenzunterschied bestimmt werden und der erste Abstand durch lineare Näherung der ersten Phasenunterschiede als Funktion der ersten Frequenzunterschiede bestimmt wird; und
- durch die wenigstens eine zweite Heterodynmessung für eine Vielzahl von zweiten Modenpaaren, wobei jedes der zweiten Modenpaare aus einer Mode der zweiten Referenzpulsfolge und einer Mode der von dem Objekt (3) reflektierten Anteilen der zweiten Pulsfolge (4) besteht, ein jeweiliger zweiter Phasenunterschied und ein jeweiliger zweiter Frequenzunterschied bestimmt werden und der zweite Abstand durch lineare Näherung der zweiten Phasenunterschiede als Funktion der zweiten Frequenzunterschiede bestimmt wird.

5. Verfahren nach einem der vorhergehenden Ansprüche,
**dadurch gekennzeichnet, dass**
- die initiale Pulsfolge (9) mit einer vorgegebenen Repetitionsfrequenz erzeugt wird, die in einem Bereich von 1 kHz bis 1GHz liegt oder in einem Bereich von 100 kHz bis 500 MHz oder in einem Bereich von 500 kHz bis 100 MHz; und/oder
- die initiale Pulsfolge (9) mit einer Zentralwellenlänge in einem Bereich von 740 nm bis 2000 nm erzeugt wird.

6. Aktives optisches Sensorsystem (1) zur Bestimmung eines ersten Abstands und eines zweiten Abstands eines Objekts (3) von dem Sensorsystem (1), aufweisend eine Laserquelle (6) und eine Steuereinheit (7), die dazu eingerichtet ist, die Laserquelle (6) zum Erzeugen einer initialen Pulsfolge (9) mit einem initialen Frequenzspektrum (9'), das einem Frequenzkamm entspricht, anzusteuern, wobei
- das Sensorsystem (1) ein Optiksystem (22) aufweist, das dazu eingerichtet und angeordnet ist, basierend auf der initialen Pulsfolge (9) eine erste Pulsfolge (4) mit einem ersten Frequenzspektrum, das einem ersten Teil des Frequenzkamms entspricht, und eine erste Referenzpulsfolge (14) mit dem ersten Frequenzspektrum zu erzeugen;
- das Optiksystem (22) dazu eingerichtet und angeordnet ist, basierend auf der initialen Pulsfolge (9) eine zweite Pulsfolge (5) mit einem zweiten Frequenzspektrum, das einem von dem ersten Teil verschiedenen zweiten Teil des Frequenzkamms entspricht, und eine zweite Referenzpulsfolge (15) mit dem zweiten Frequenzspektrum zu erzeugen;
- das Optiksystem (22) eine optische Filtereinheit (11) aufweist, die dazu eingerichtet und angeordnet ist, die initiale Pulsfolge (9) frequenzabhängig zu filtern, um eine erste Zwischenpulsfolge mit dem ersten Frequenzspektrum und eine zweite Zwischenpulsfolge mit dem zweiten Frequenzspektrum zu erzeugen;
- das Optiksystem (22) einen ersten Strahlteiler (12) aufweist, der angeordnet ist, die erste Zwischenpulsfolge in die erste Pulsfolge (4) und die erste Referenzpulsfolge (14) zu teilen;
- das Optiksystem (22) einen zweiten Strahlteiler (13) aufweist, der angeordnet ist, die zweite Zwischenpulsfolge in die zweite Pulsfolge (5) und die zweite Referenzpulsfolge (15) zu teilen;
- das Optiksystem (22) dazu eingerichtet und angeordnet ist, die erste Pulsfolge (4) und die zweite Pulsfolge (5) in Richtung eines Objekts (3) zu emittieren;
- das Sensorsystem (1) einen ersten Heterodyndetektor (16) aufweist, der dazu eingerichtet und angeordnet ist, wenigstens ein erstes elektrisches Signal basierend auf der ersten Referenzpulsfolge (14) und von dem Objekt (3) reflektierten Anteilen der ersten Pulsfolge (4) zu erzeugen;
- das Sensorsystem (1) einen zweiten Heterodyndetektor (17) aufweist, der dazu eingerichtet und angeordnet ist, wenigstens ein zweites elektrisches Signal basierend auf der zweiten Referenzpulsfolge (15) und von dem Objekt (3) reflektierten Anteilen der zweiten Pulsfolge (5) zu erzeugen; und
- das Sensorsystem (1) eine Auswerteeinheit (8) aufweist, die dazu eingerichtet ist, abhängig von dem wenigstens einen ersten elektrischen Signal einen ersten Abstand des Objekts (3) von dem Sensorsystem (1) zu bestimmen und abhängig von dem wenigstens einen zweiten elektrischen Signal einen zweiten Abstand des Objekts (3) von dem Sensorsystem (1) zu bestimmen.

7. Aktives optisches Sensorsystem (1) nach Anspruch 6,
**dadurch gekennzeichnet, dass**
die Laserquelle (6) einen modengekoppelten Laser beinhaltet.

## Claims

1. A method for determining a first distance and a second distance of an object (3) from an active optical sensor system (1) by the sensor system (1), wherein an initial pulse sequence (9) with an initial frequency spectrum (9'), which corresponds to a frequency comb, is generated by a laser source (6), wherein the frequency comb comprises a plurality of modes with a respective mode frequency, wherein
- a first pulse sequence (4) with a first frequency spectrum, which corresponds to a first part of the frequency comb, and a first reference pulse sequence (14) with the first frequency spectrum are generated based on the initial pulse sequence (9);
- a second pulse sequence (5) with a second frequency spectrum, which corresponds to a second part of the frequency comb different from the first part, and a second reference pulse sequence (15) with the second frequency spectrum are generated based on the initial pulse sequence (9);
- the initial pulse sequence (9) is filtered frequency-dependently to generate a first intermediate pulse sequence with the first frequency spectrum and a second intermediate pulse sequence with the second frequency spectrum;
- the first intermediate pulse sequence is split into the first pulse sequence (4) and the first reference pulse sequence (14); and
- the second intermediate pulse sequence is split into the second pulse sequence (5) and the second reference pulse sequence (15)
- the first pulse sequence (4) and the second pulse sequence (5) are emitted towards the object (3);
- the first distance of the object (3) from the sensor system (1) is determined by at least one first heterodyne measurement based on the first reference pulse sequence (14) and portions of the first pulse sequence (4) reflected by the object (3); and
- the second distance of the object (3) from the sensor system (1) is determined by at least one second heterodyne measurement based on the second reference pulse sequence (15) and portions of the second pulse sequence (5) reflected by the object (3).

2. The method according to claim 1,
**characterized in that**
- the first part of the frequency comb includes modes of the frequency comb, the mode frequencies of which are smaller than a preset limit frequency; and
- the second part of the frequency comb includes modes of the frequency comb, the mode frequencies of which are greater than the limit frequency.

3. The method according to any one of the preceding claims,
**characterized in that**
- by the at least one first heterodyne measurement a first phase difference between a mode of the first reference pulse sequence and a mode of the portions of the first pulse sequence (4) reflected by the object (3) is determined; and/or
- by the at least one second heterodyne measurement a second phase difference between a mode of the second reference pulse sequence and a mode of the portions of the second pulse sequence (4) reflected by the object (3) is determined, and the second distance is determined depending on the second phase difference.

4. The method according to one of claims 1 or 2,
**characterized in that**
- by the at least one heterodyne measurement for a plurality of first mode pairs, wherein every one of the first mode pairs is composed of a mode of the first reference pulse sequence and a mode of the portions of the first pulse sequence (4) reflected by the object (3), a respective first phase difference and a respective first frequency difference are determined and the first distance is determined by linear approximation of the first phase differences as a function of the first frequency differences; and
- by the at least one second heterodyne measurement for a plurality of second mode pairs, wherein each of the second mode pairs is composed of a mode of the second reference pulse sequence and a mode of the portions of the second pulse sequence (4) reflected by the object (3), a respective second phase difference and a respective second frequency difference are determined and the second distance is determined by linear approximation of the second phase differences as a function of the second frequency differences.

5. The method according to any one of the preceding claims,
**characterized in that**
- the initial pulse sequence (9) is generated with a preset repetition frequency, which is in a range from 1 kHz to 1 GHz or is in a range from 100 kHz to 500 MHz or in a range from 500 kHz to 100 MHz; and/or
- the initial pulse sequence (9) is generated with a central wavelength in a range from 740 nm to 2000 nm.

6. An active optical sensor system (1) for determining a first distance and a second distance of an object (3) from the sensor system (1), comprising a laser source (6) and a control unit (7), which is configured to control the laser source (6) for generating an initial pulse sequence (9) with an initial frequency spectrum (9'), which corresponds to a frequency comb, wherein
- the sensor system (1) comprises an optical system (22), which is configured and arranged to generate a first pulse sequence (4) with a first frequency spectrum, which corresponds to a first part of the frequency comb, and a first reference pulse sequence (14) with the first frequency spectrum based on the initial pulse sequence (9);
- the optical system (22) is configured and arranged to generate a second pulse sequence (5) with a second frequency spectrum, which corresponds to a second part of the frequency comb different from the first part, and a second reference pulse sequence (15) with the second frequency spectrum based on the initial pulse sequence (9);
- the optical system (22) comprises an optical filter unit (11), which is configured and arranged to filter the initial pulse sequence (9) frequency-dependently, to generate a first intermediate pulse sequence with the first frequency spectrum and a second intermediate pulse sequence with the second frequency spectrum;
- the optical system (22) comprises a first beam splitter (12), which is arranged to split the first intermediate pulse sequence into the first pulse sequence (4) and the first reference pulse sequence (14);
- the optical system (22) comprises a second beam splitter (13), which is arranged to split the second intermediate pulse sequence into the second pulse sequence (5) and the second reference pulse sequence (15);
- the optical system (22) is configured and arranged to emit the first pulse sequence (4) and the second pulse sequence (5) towards an object (3);
- the sensor system (1) comprises a first heterodyne detector (16), which is configured and arranged to generate at least one first electrical signal based on the first reference pulse sequence (14) and portions of the first pulse sequence (4) reflected by the object (3);
- the sensor system (1) comprises a second heterodyne detector (17), which is configured and arranged to generate at least one second electrical signal based on the second reference pulse sequence (15) and portions of the second pulse sequence (5) reflected by the object (3); and
- the sensor system (1) comprises an evaluation unit (8), which is configured to determine a first distance of the object (3) from the sensor system (1) depending on the at least one first electrical signal and to determine a second distance of the object (3) from the sensor system (1) depending on the at least one second electrical signal.

7. The active optical sensor system (1) according to claim 6,
**characterized in that**
the laser source (6) includes a mode-locked laser.

## Revendications

1. Procédé de détermination d'une première distance et d'une deuxième distance d'un objet (3) à un système de capteurs optique actif (1) au moyen du système de capteurs (1), une séquence d'impulsions initiale (9) ayant un spectre de fréquences initial (9'), qui correspond à un peigne de fréquences, étant générée au moyen d'une source laser (6), le peigne de fréquences comportant un grand nombre de modes ayant une fréquence de mode respective,
une première séquence d'impulsions (4) ayant un premier spectre de fréquences, qui correspond à une première partie du peigne de fréquences, et une première séquence d'impulsions de référence (14) ayant le premier spectre de fréquences étant générées sur la base de la séquence d'impulsions initiale (9) ;
une deuxième séquence d'impulsions (5) ayant un deuxième spectre de fréquences, qui correspond à une deuxième partie du peigne de fréquences qui est différente de la première partie, et une deuxième séquence d'impulsions de référence (15) ayant le deuxième spectre de fréquences étant générées sur la base de la séquence d'impulsions initiale (9) ;
la séquence d'impulsions initiale (9) étant filtrée en fonction de la fréquence afin de générer une première séquence d'impulsions intermédiaire ayant le premier spectre de fréquences et une deuxième séquence d'impulsions intermédiaire ayant le deuxième spectre de fréquences ;
la première séquence d'impulsions intermédiaire étant divisée en la première séquence d'impulsions (4) et la première séquence d'impulsions de référence (14) ; et
la deuxième séquence d'impulsions intermédiaire étant divisée en la deuxième séquence d'impulsions (5) et la deuxième séquence d'impulsions de référence (15) ;
la première séquence d'impulsions (4) et la deuxième séquence d'impulsions (5) étant émises en direction de l'objet (3) ;
la première distance de l'objet (3) au système de capteurs (1) étant déterminée au moyen d'au moins une première mesure hétérodyne basée sur la première séquence d'impulsions de référence (14) et des parties de la première séquence d'impulsions (4) réfléchies par l'objet (3) ; et
la deuxième distance de l'objet (3) au système de capteurs (1) étant déterminée au moyen d'au moins une deuxième mesure hétérodyne basée sur la deuxième séquence d'impulsions de référence (15) et des parties de la deuxième séquence d'impulsions (5) réfléchies par l'objet (3).

2. Procédé selon la revendication 1,
**caractérisé en ce que**
la première partie du peigne de fréquences contient des modes du peigne de fréquences dont les fréquences de mode sont inférieures à une fréquence de coupure spécifiée ; et
la deuxième partie du peigne de fréquences comprend des modes du peigne de fréquences dont les fréquences de mode sont supérieures à la fréquence de coupure.

3. Procédé selon l'une des revendications précédentes,
**caractérisé en ce que**
une première différence de phase entre un mode de la première séquence d'impulsions de référence et un mode des parties de la première séquence d'impulsions (4) réfléchies par l'objet (3) est déterminée par l'au moins une première mesure hétérodyne et la première distance est déterminée en fonction de la première différence de phase ; et/ou
une deuxième différence de phase entre un mode de la deuxième séquence d'impulsions de référence et un mode des parties de la deuxième séquence d'impulsions (4) réfléchies par l'objet (3) est déterminée par l'au moins une deuxième mesure hétérodyne et la deuxième distance est déterminée en fonction de la deuxième différence de phase.

4. Procédé selon l'une des revendications 1 ou 2,
**caractérisé en ce que**
une première différence de phase respective et une première différence de fréquence respective sont déterminées par l'au moins une première mesure hétérodyne pour un grand nombre de premières paires de modes, chacune des premières paires de modes comprenant un mode de la première séquence d'impulsions de référence et un mode des parties de la première séquence d'impulsions (4) réfléchies par l'objet (3), et la première distance est déterminée par une approximation linéaire des premières différences de phase en fonction des premières différences de fréquence ; et
une deuxième différence de phase respective et une deuxième différence de fréquence respective sont déterminées par l'au moins une deuxième mesure hétérodyne pour un grand nombre de deuxièmes paires de modes, chacune des deuxièmes paires de modes comprenant un mode de la deuxième séquence d'impulsions de référence et un mode des parties de la deuxième séquence d'impulsions (4) réfléchies par l'objet (3), et la deuxième distance est déterminée par une approximation linéaire des deuxièmes différences de phase en fonction des deuxièmes différences de fréquence.

5. Procédé selon l'une des revendications précédentes,
**caractérisé en ce que**
la séquence d'impulsions initiale (9) est générée avec une fréquence de répétition spécifiée qui est située dans une gamme allant de 1 kHz à 1 GHz ou dans une gamme allant de 100 kHz à 500 MHz ou dans une gamme de 500 kHz à 100 MHz ; et/ou
la séquence d'impulsions initiale (9) est générée avec une longueur d'onde centrale dans une gamme allant de 740 nm à 2000 nm.

6. Système de capteurs optique actif (1) destiné à déterminer une première distance et une deuxième distance d'un objet (3) au système de capteurs (1), ledit système de capteurs comportant une source laser (6) et une unité de commande (7) qui est conçue pour commander la source laser (6) afin de générer une séquence d'impulsions initiale (9) ayant le spectre de fréquences initial (9') qui correspond à un peigne de fréquences,
- le système de capteurs (1) comportant un système optique (22) qui est conçu et disposé pour générer, sur la base de la séquence d'impulsions initiale (9), une première séquence d'impulsions (4) ayant un premier spectre de fréquences, qui correspond à une première partie du peigne de fréquences, et une séquence d'impulsions de référence (14) ayant le premier spectre de fréquences ;
- le système optique (22) étant conçu et disposé de façon à générer, sur la base de la séquence d'impulsions initiale (9), une deuxième séquence d'impulsions (5) ayant un deuxième spectre de fréquences, qui correspond à une deuxième partie du peigne de fréquences qui est différente de la première partie, et une deuxième séquence d'impulsions de référence (15) ayant le deuxième spectre de fréquences ;
- le système optique (22) comportant une unité de filtrage optique (11) qui est conçue et disposée de façon à filtrer la séquence d'impulsions initiale (9) en fonction de la fréquence afin de générer une première séquence d'impulsions intermédiaire ayant le premier spectre de fréquences et une deuxième séquence d'impulsions intermédiaire ayant le deuxième spectre de fréquences ;
- le système optique (22) comportant un premier séparateur de faisceau (12) qui est disposé de façon à diviser la première séquence d'impulsions intermédiaire en la première séquence d'impulsions (4) et la première séquence d'impulsions de référence (14) ;
- le système optique (22) comportant un deuxième séparateur de faisceau (13) qui est disposé de façon à diviser la deuxième séquence d'impulsions intermédiaire en la deuxième séquence d'impulsions (5) et la deuxième séquence d'impulsions de référence (15) ;
- le système optique (22) étant conçu et disposé de façon à émettre la première séquence d'impulsions (4) et la deuxième séquence d'impulsions (5) en direction d'un objet (3) ;
- le système de capteurs (1) comprenant un premier détecteur hétérodyne (16), qui est conçu et disposé de façon à générer au moins un premier signal électrique sur la base de la première séquence d'impulsions de référence (14) et de parties de la première séquence d'impulsions (4) réfléchies par l'objet (3) ;
- le système de capteurs (1) comprenant un deuxième détecteur hétérodyne (17), qui est conçu et disposé de façon à générer au moins un deuxième signal électrique sur la base de la deuxième séquence d'impulsions de référence (15) et de parties de la deuxième séquence d'impulsions (5) réfléchies par l'objet (3) ; et
- le système de capteurs (1) comportant une unité d'évaluation (8) qui est conçue pour déterminer une première distance de l'objet (3) au système de capteurs (1) en fonction de l'au moins un premier signal électrique et une deuxième distance de l'objet (3) au système de capteurs (1) en fonction de l'au moins un deuxième signal électrique.

7. Système de capteurs optique actif (1) selon la revendication 6,
**caractérisé en ce que**
la source laser (6) contient un laser à verrouillage de mode.
